# EUROPEAN PATENT APPLICATION

(11) **EP 1 864 848 A1**
(43) Date of publication of application: **12.12.2007**
(21) Application number: 07109905.5
(22) Date of filing: 08.06.2007
(51) Int. Cl.: B60M 1/06

(54) **Compensation-device for a magnetic field**

(30) Priority: 09.06.2006 NL 1031977
(71) Applicant: Technische Universiteit Delft, 2628 CN Delft (NL)
(72) Inventor: Kruit, Pieter, 2611 EB, Delft (NL); Ferreira, Jan Abraham, 2497 BS, Den Haag (NL)
(74) Representative: Van Breda, Jacobus

(57) **Abstract**

The invention relates to compensation device for a magnetic field generated through electric traction in a tram or train transport system that comprises an overhead line and rails, the overhead line and rails during operation being live, wherein a predetermined section of the overhead line and rails is provided with adjacent circuits, each of which comprising an electrical conductor element running next to the overhead line, able to, during operation, conduct a second current running counter to the first current in the overhead line, which circuits further possess second electrical conductor elements joined to both sides of the first electrical conductor element, which extend from the first electrical conductor element to near the rails, and wherein each of the adjacent circuits is connected to an own power source that is controlled subject to a local electrical parameter of the tram or train transport system, wherein the local electrical parameter is selected from the group comprising a voltage over a section of the rails, a voltage over, or a current through a section of the overhead line.

## Description

The invention relates to a compensation device for a magnetic field generated through electric traction in a tram or train transport system that comprises an overhead line and rails, which overhead line and rails during operation are live, wherein a predetermined section of the overhead line and rails is provided with adjacent circuits, each of which comprising an electrical conductor element running next to the overhead line, able to, during operation, conduct a second current running counter to the first current in the overhead line, which circuits further possess second electrical conductor elements joined to both sides of the first electrical conductor element, which extend from the first electrical conductor element to near the rails, and wherein each of the adjacent circuits is connected to an own power source that is controlled subject to a local electrical parameter of the tram or train transport system.

Such a compensation device is known from the German Offenlegungsschrift DE-A-43 14 718.

The compensation device according to the invention is characterized by one or several of the appended claims.

A first embodiment of the compensation device according to the invention is characterized in that the local electrical parameter is a voltage over a section of the rails. The power source is then preferably controlled such that this voltage over the rails tends towards zero.

A second, in practice more robust, embodiment is characterized in that the local electrical parameter is a voltage over, or a current through a section of the overhead line. The local electrical parameter may optionally also be determined from a combination of such an overhead line measurement with a measurement at the rails. In all cases it is prudent to also measure locally, although it may be useful to take into account parameters determined from a distance, such as the magnetic field to be measured externally. For calibration purposes it is conceivably also useful to apply correction parameters. The manner in which this may be carried out in a distributed measurement and control system is fully known to the person skilled in the art, and requires no further explanation.

The compensation device according to the invention possesses the advantage that it can be used without specific measures regarding the tram or train transport system itself; more in particular, there is no need to take measures to electrically separate sections of the rails. Furthermore, the compensation device according to the invention makes it possible to provide a more accurate compensation without restrictions regarding the size of the area to be compensated. The size of the area to be compensated is simply determined by the number of circuits connected in series one behind the other, while moreover, the effectiveness of the compensation does not depend on whether one or several trams or trains are present in the area to be compensated. With the compensation device according to the invention it is possible to generate sufficient compensating currents in the area where the tram or train is located, such that the thus generated magnetic dipole compensates precisely the dipole that results from the supply current or supply currents of the tram or train.

A feature of the compensation device according to the invention is further that it can be used without adapting the tram or train transport system with which this device is used. As a consequence of this aspect the rails will, whatever the circumstances, remain functional in conducting the return current of the (supply) current carried via the overhead line for the realization of traction.

A particularly advantageous embodiment of the device is characterized in that the rails are part of the adjacent circuits by way of the connection of the second electrical conductor elements with the rails. This embodiment provides the advantage that current leakage from the rails to the surroundings is avoided, because the compensation currents circulating through the various circuits fully compensate the return (supply) current through the rails. This compensation prevents the accumulation of electrical voltage in the rails in the area between the tram or train and the supply station or the supply stations for this tram or train. This also avoids the occurrence of current leakage via the ground on which the rails rest.

Hereinafter the invention will be further elucidated by way of several exemplary embodiments and with reference to the drawing.

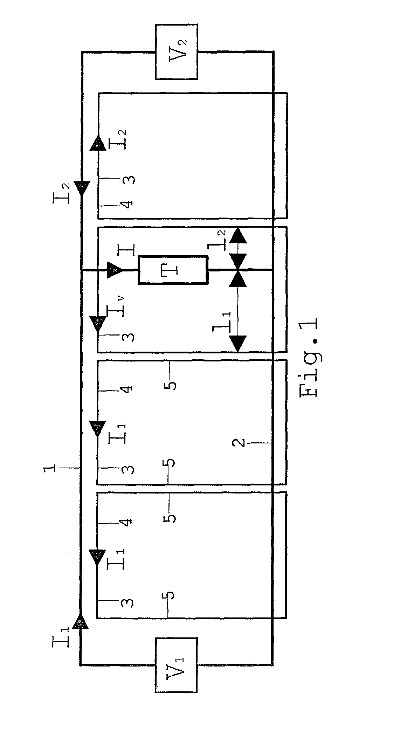

In Figures 1-6, the drawing shows several electrical circuit diagrams of a tram or train transport system and, to be used in combination therewith, various possible embodiments of a compensation device according to the invention.

Identical reference numerals and letters used in the Figures refer to similar parts.

With reference first to Figure 1, which shows the equivalent-circuit diagram of a tram transport system comprising a first substation with a supply voltage V1 and, at a distance of several kilometres, a second substation with a supply votage V2.

The two substations are connected with each other by means of, for one thing, an overhead line 1 and, for another thing, the rails 2.

T indicates a tram located somewhere between the first substation V1 and the second substation V2. Via the overhead line 1, the tram T is powered from the first substation V1 with a first current I1, and from the second substation V2 with a current I2, respectively.

After the currents I1 and I2 have left the tram T subsequent to generating electric traction by means of an electric motor provided for this purpose, they return to their respective substations V1 and V2 via the rails 2.

Figure 1 depicts the fundamental measure of the invention, which involves a plurality of adjacent circuits 3 provided between the first substation V1 and the second substation V2. This clearly shows that each circuit 3 possesses a first electrical conductor element 4 running next to the overhead line 1, as well as second electrical conductor elements 5 extending from the first electrical conductor element 4 to near the rails 2, and joined to both sides of this first electrical conductor element 4.

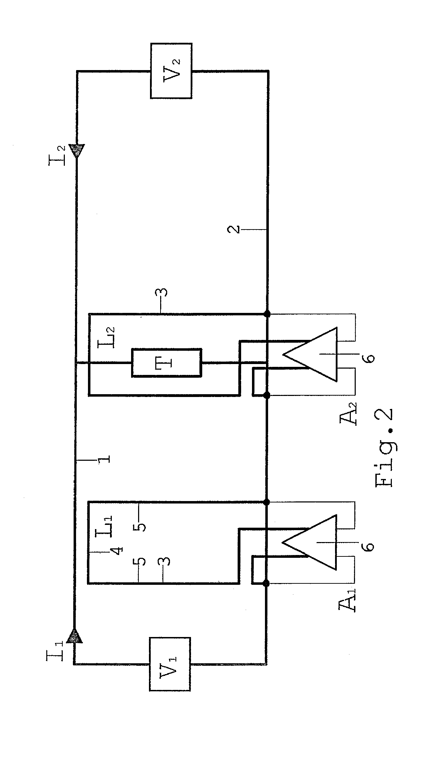

To further explain the invention, the compensation device will be further elucidated with reference to the Figures 2-6. Each of the Figures 2-6 only shows a few circuits 3. In reality, the circuits 3 always directly succeed each other and they fill the entire space of the area to be compensated as shown in Figure 1 with respect to the area extending between the first substation V1 and the second substation V2.

In Figure 2 an embodiment is depicted wherein the rails 2 form part of the adjacent circuits 3 through the second electrical conductor elements 5 being connected to the rails 2. This Figure 2 also shows that each of the adjacent circuits 3 is connected to a power source 6, which is controllable subject to a local electric parameter of the tram or train transport system. In the illustrated case, this local electrical parameter concerns a voltage measured over a section of the rails 2 where the respective circuit 3 is located.

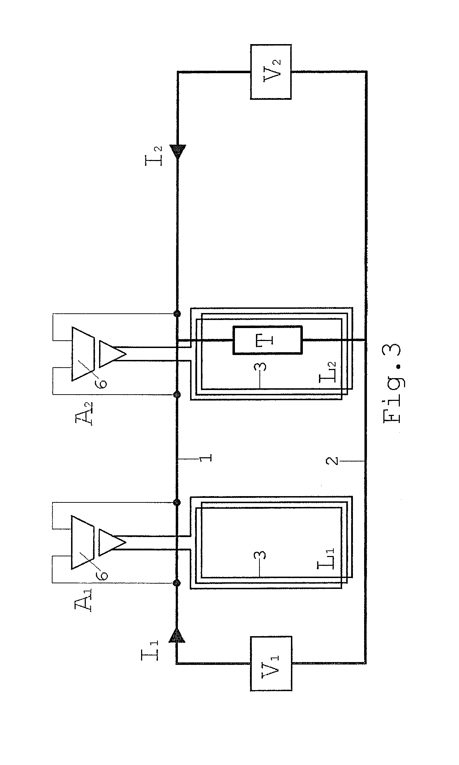

Figure 3 shows an embodiment wherein the local electrical parameter, upon which the controllable power source 6 depends, is formed by a voltage measured over a section of the overhead line 1 that relates to the section where the respective circuit 3 is located. In this embodiment, the circuit 3 is embodied completely separately from the electrical system of the tram or train transport system as such, that is to say, neither rails 2 nor overhead line 1 are part of the circuit 3. By suitably choosing the number of turns of the circuit 3 it is further possible to limit the amperage to be conducted through the circuit 3.

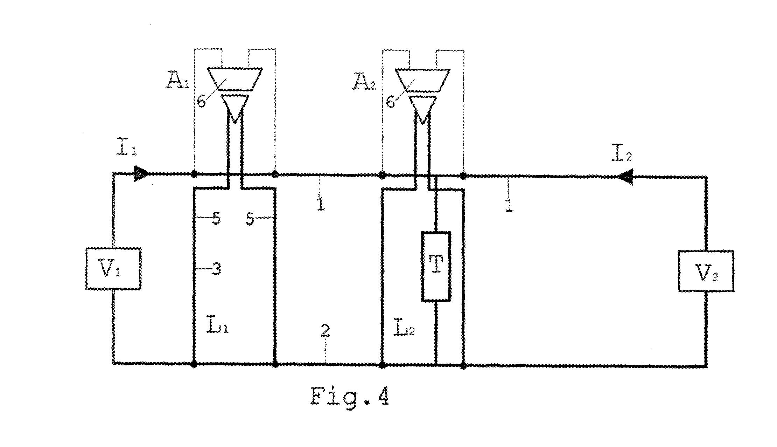

Figure 4 shows a variant that, with respect to Figure 3, has been altered in that the rails 2 shown in the embodiment in Figure 4 are part of the adjacent circuits 3 through connecting the second electrical conductor elements 5 to the rails 2. As mentioned earlier, this affords the advantage that leakage losses of current conducted via the rails 2 are avoided.

In Figure 4 the power source 6 is also controlled subject to a voltage measured over the section of the overhead line 1 that is located near the respective circuit 3.

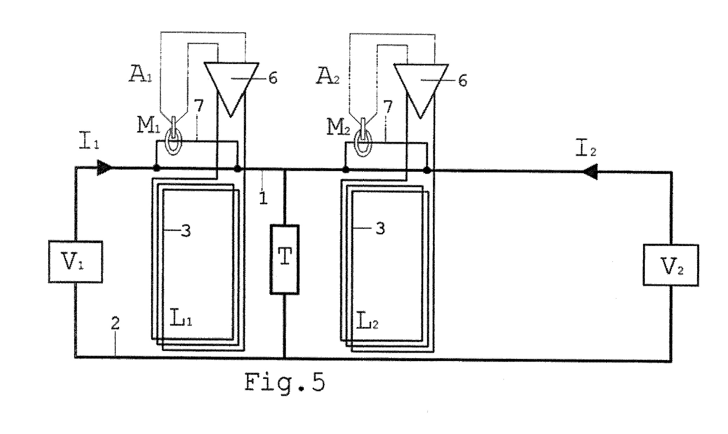

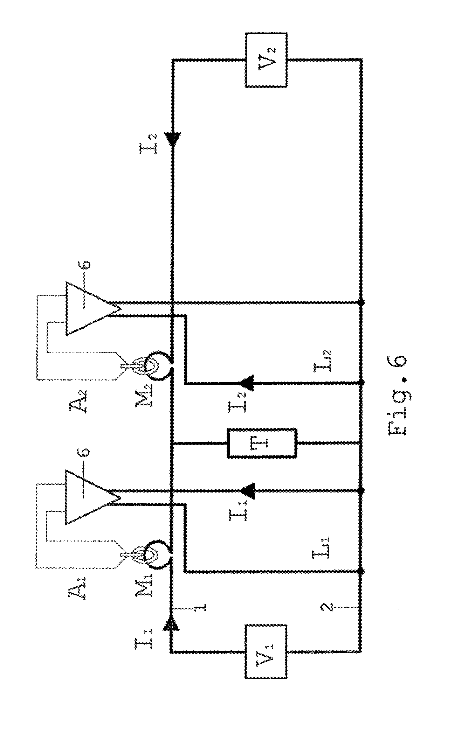

Further variants are shown in Figure 5 and Figure 6.

In Figure 5 and Figure 6, the electrical parameter that serves for controlling the power source 6 is always derived from a directly or indirectly measured current through the overhead line 1.

In Figure 5, the current through the overhead line 1 is measured indirectly via a shunt line 7.

In Figure 6, a direct measurement of the current through the overhead line 1 is shown, on the basis of which the respective power source 6 is controlled.

Figures 5 and 6 further differ from each other by the fact that in Figure 6, the rails 2 are again incorporated in the individual adjacent circuits 3, whereas in Figure 5, the adjacent circuits 3 are separate.

It is observed that hereinbefore reference is always made to adjacent circuits 3 so as to convey that said circuits 3 are directly joined to each other in order to achieve that the adjacent, vertically oriented electrical conductor elements 5 of these various circuits 3 do not cause an effective magnetic field within or without their immediate vicinity, due to the currents conducted through these adjacent electrical conductor elements 5 being substantially equal but running in the opposite direction.

## Claims

1. A compensation device for a magnetic field generated through electric traction in a tram or train transport system that comprises an overhead line (1) and rails (2), which overhead line (1) and rails (2) during operation are live, wherein a predetermined section of the overhead line (1) and rails (2) is provided with adjacent circuits (3), each of which comprising an electrical conductor element (4) running next to the overhead line (1), able to, during operation, conduct a second current running counter to the first current in the overhead line (1), which circuits (3) further possess second electrical conductor elements (5) joined to both sides of the first electrical conductor element (4), which extend from the first electrical conductor element (4) to near the rails (2), and wherein each of the adjacent circuits (3) is connected to a power source (6) that is controlled subject to a local electrical parameter of the tram or train transport system, **characterised in that** the local electrical parameter is selected from the group comprising a voltage over a section of the rails (2), a voltage over, or a current through a section of the overhead line (1).

2. A compensation device according to claim 1, **characterised in that** the local electrical parameter is measured locally.

3. A compensation device according to claim 1 or 2, **characterised in that** each power source (6) is controllable subject to a parameter and/or a correction parameter determined from a distance.

4. A compensation device according to one of the claims 1 to 3, **characterised in that** the rails (2) are part of the adjacent circuits (3) by way of the connection of the second electrical conductor elements (5) with the rails (2).
